**Europäisches Patentamt**

**European Patent Office**

**Office européen des brevets**

(19)

(11) Publication number: **0 069 092**
A1

(12) **EUROPEAN PATENT APPLICATION**

(21) Application number: **82830188.7**

(22) Date of filing: **25.06.82**

(51) Int. Cl.³: **G 01 N 33/48**, G 01 N 15/00

(30) Priority: **25.06.81 IT 4875081**

(43) Date of publication of application: **05.01.83**
Bulletin 83/1

(84) Designated Contracting States: **AT BE CH DE FR GB LI LU NL SE**

(71) Applicant: **B.I.M. S.r.L., 49 Corso Matteotti, I-10121 Turin (IT)**

(72) Inventor: **Cirillo, Francesco, Prof., 19, Via Giacinto Carini, I-00100 Rome (IT)**
Inventor: **Scotti, Carlo, Dr., 1, Prolugamento Via Amoruso, I-70100 Bari (IT)**

(74) Representative: **Cioncoloni, Enrico, Dr., Studio Consulenza Brevetti 76, Via F. Turati, I-00185 Rome (IT)**

(54) **A device to value objectively the concentration and motility of spermatozoa in a sample of seminal liquid with data processing and visible display of reliable results.**

(57) The invention concerns a device to value objectively the concentration and motility of spermatozoa in a sample of seminal liquid and particularly a device by which in a short time and very simple manner the Doppler effect due to the division of a coherent beam of monochromatic light emitted by a He-Ne Laser of polarized type in two sub-beams of reference light and diffused light, respectively as well as the beating phenomenon due to the near frequency of same when rejoined together in a single beam, are exploited to draw out a signal to be processed by electronic way with visible display of the reliable results of the examination. An optical system is provided to reflect and/or refract the original beam and divide same, one of sub-beams having the original reference frequency while the other is incident on the sample and influenced by the characteristics thereof. A photodetector receives such rejoined beam and provides such signal to be processed. Both device and processor are relatively small sized to be easily transported and placed where the examination is to be carried out.

ACTORUM AG

The invention relates to a device to value objectively the concentration and motility of spermatozoa in a sample of seminal liquid, and particularly a device by which in a short time and very simple manner the Doppler effect due to the division of a coherent monochromatic light beam emitted by a polarized Laser is exploited together with the beat of the two electromagnetic waves provided by such division and relating the two sub-beams thereby generated and comprising a reference sub-beam of light having the original frequency and a sub-beam of reflected light whose frequency is different, respectively.

An object of the invention is also the process of data resulting from the examination of such sample, beginning from the output signal of a photodetector which is receiving the new beam formed by the rejoined sub-beams of light after the passage of same through the optical system of the device. Alphanumerical results are then displayed and/or graphically presented on a monitor in relation with one or more samples of seminal liquid, as the device according to the invention is also provided with means for a sequential examination of the samples which may be fed automatically.

The examination of seminal liquid has attracted from many years the attention of searchers and particularly doctors and technicians to provide a device suitable to study and solve problems which are relating particularly to the male sterility. On the ground of experimental results the attention has been devoted particularly to the evaluation of concentration and motility of the spermatozoa contained in a sample of seminal liquid. In accordance with the most recent

- 3 -

studies it is accepted generally that such evaluation gives a reliable reply to the problema of sterility or fecundity of the male, even by intermediate evaluations, so that the doctor may take part according to the obtained results and desired finalities.

Concentration and motility of spermatozoa in a sample of ejaculated seminal liquid have already been and are also to day observed by a microscopic way with the purpose of deducing the respective values. Obviously, only subj-ective evaluations may be deduced in this manner which cannot be considered as effectively reliable in the field of analysis recalled hereabove when it is taken in account that:  the concentration range of spermatozoa is of tens of millions/cm$^3$, so that an evaluation by this method is really problematic also when a rough estimate is desired; in a sample of seminal liquid observed by a microscope the spermatozoa appear with different characteristics of motility, either in regards to the velocity of motile spermatozoa and in regards to the direction of movement of each spermatozoon. Further  referring to the motility it is indeed to point out that the velocity of spermatozoa may be 0 for a part of same and is rising to a maximum, middle, minimum value for many others, the spermatozoa being movable in many different directions, also opposite each other.

In place of a subjective examination by a microscopic observation, an objective examination has been proposed particularly in the last years, in order to obtain results which are really independent from a personal evaluation and available in a relatively short time, comprising also the pre-

-4-

- 4 -

paration of the sample, compared with a microscopic examination, a time of some decines of minutes being necessary in this latter case.

When the prior subjective examination is replaced by an objective examination it is evid-ently possible that the desired measurements may also be performed by not-qualified operators, a further advantage being consequently added to the main advantage relating to the objective examination.

Studies and experiments to value objectively the concentration and motility of spermatozoa in a sample of seminal liquid, in order to deduce reliably the capacity of fecundation of the male who has ejaculated such seminal liquid, have been directed principally to a physical method to determine the influence that a sample to be examined may have on the frequency of a beam of light incident thereon; and particularly the frequency variation of the light which is diffused after the beam has passed through the sample, in comparison with the original frequency of the beam of light incident thereon.

On the other hand, as said before, the spermatozoa observed by a microscope appear with different characteristics of velocity, evidently in accordance with the movement of each one towards the ovule to be fecundated. That is to say, there are motionless spermatozoa as well as sparmatozoa having a low or high velocity, their capacity of fecundation being consequently different. According to the latest laboratory studies the distribution of spermatozoa velocity may be considered as follows:

- 5 -

$$p(v) = \frac{v}{v_c^2} e^{-\frac{v}{v_c}}$$

wherein:

v = velocity of the sperm-atozoon

p(v) = density of relative probability at velocity v

$v_c$ = characteristic velocity of the family of spermatozoa being examined

The characteristic velocity $v_c$ is a parameter suitable to represent the behaviour of the examined sample of seminal liquid in its whole with the most representative velocity in the family of spermatozoa, the value range of which isz generally from 20 to 50 μm/sec. On the other hand, the characteristic velocity $v_c$ is deducible by performing practically the physical method cited above and deriving the frequency spectrum due to the Doppler effect through the frequency variation of the light diffused by the sample being examined in respect to the original frequency of the light incident thereon.

The frequency spectrum in semi-log coordinates is indeed a straight line with a slope the inverse angle of which is equivalent directly to such characteristic $v_c$ while the spectrum area represents a quantity which is only proportional to the number of motile spermatozoa.

As recalled above, the Doppler effect is the base of the physical method most applied to-day for a reliable examination of seminal liquid in order to value the concentration and motility of spermatozoa, i.e. the capacity of the sperm to fecundate the ovule and is generally represented by the

following formula:

$$f - f_o = 2\frac{v}{c} f_o \cos\alpha \operatorname{sen}\frac{\theta}{2} \qquad (1)$$

wherein:

c = velocity of the light

v = velocity of motile spermatozoa

θ = diffusion angle (i.e. the angle between the direction of incident light and direction of diffused light)

α = angle between the outer bisectrix of θ and the direction of velocity v of motile spermatozoa

It is possible to note that in the formula (1) relating to the Doppler effect, as it is preferred to-day for the examination of seminal liquid according to the cited physical method, the difference between the velocity of the light c (300,000 km/sec) and the velocity of spermatozoa v (some few μm/sec) is so great that the provided frequencies f and $f_o$ which relate to the light diffused from a sample being examined and the light incident thereon, respectively are nearly equal so that a beating phenomenon is generated. On the other hand it is to be pointed out that in order to embody practically the physical method preferred for the analysis, beams of light which are relating to reference light with a frequency $f_o$ and diffused light of the sample with frequency f have been generated by the initial division of a single coherent beam of monochromatic light emitted by a Laser. That is to say, two divided sub-beams are generated to be rejoined together successively as a single new beam of light the frequency of which is the mean of the two, na-

mely $(f+f_o)/2$, while the modulated amplitude corresponds to the difference, namely $(f-f_o)$. Such a single rejoined beam of light has then been analysed by electronic way according to the actual techniques to examine objectively a sample/samples and visually display the reliable results obtained thereby.

As the spectrum due to the Doppler effect is a straight line in a semi-log system of reference coordinates, with a certain slope in respect to same, an electronic apparatus has been provided which is suitable to value the concentration and motility of spermatozoa in a sample of seminal liquid being examined and consequently deduce a reliable evaluation of the capacity of the male who has ejaculated such seminal liquid to fecundate an ovule.

While above physical method is applied as also suggested at present by searchers and skilled in the art, it is to be pointed out that the advantages of such application are actually attenuated principally because of the following important factors:

a) very remarkable and expensive sizes of the suggested, designed and manufactured devices based on the Doppler effect, so that they cannot be considered suitable from the constructive and employment points of view, particularly when routine analysis of semen are to be carried out;

b) the component members of the optical system to provide reflections and refractions of the coherent beam of monochromatic light emitted by the Laser, as well as the beam divider to solve above formula (1) require a particular attention also in regards to their constructive features as the glass surfaces of respective component members are
to be actually suitable to well carry on their functions;

c) the data processing which is beginning from the signal
due to the rejoined beam of light comprising the two sub-
beams originated by the divided original beam of light
emitted by the Laser - the first one still having the ori-
ginal frequency $f_0$ and the second a frequency $f$ relating to the diffused light of the sample - is performed by
means of dimensionally encumbering electronic apparatus
the use of which is generally different from the data processing of the examined sample/samples (spectrum analyser).
Furthermore these processors do not give directly the desired useful results.

A main object of the invention is to provide a device for the
examination of one or more samples of seminal liquid in a sequential predetermined manner, such device comprising:

- a polarized Laser of a low optical power to be energized
for emitting a coherent beam of monochromatic light direc-
ted to an optical system, such Laser being mounted on a plane of a box-container wherein the optical system is enclosed, the box-container being relatively small sized and therefore easily transportable to the place where the device
is to be used;

- an optical system which comprises substantially reflecting
and/or refracting component members to divide the original
coherent beam of light emitted by the Laser in two sub-
beams, a first sub-beam having the original reference frequency and a second sub-beam the frequency of which, while
being like the original frequency when such sub-beam is
incident on the sample to be examined, provides an output
diffused light with a different frequency after having passed therethrough, as such second sub-beam is influenced by the characteristics of the sample. The two sub-beams are then rejoined together as a single new beam of light which however generates a beating between the respective electromagnetic waves because of the very small difference between the frequencies of the first and second sub-beams.

Another object of the invention is to make use of an optical system which, besides to be containable within a box-container of relatively small sizes and therefore easily transportable, is provided with component members the operative surfaces of which do not require any special treatment as they are of a conventional and easily found type. These component members are only provided with blackened covers having small openings which are sufficient for the desired effects, so that those eventual interferences of secondary radiations which could be possible because of the relatively big thickness of the glass are avoided.

A further object of the invention is to provide a suitable support unit for one or more mini-test tubes containing samples of seminal liquid to be examined, such support unit comprising a part with thermostat in order to keep the sample/samples at a desired temperature, such part being solid for the box-container structure, and a part which in turn comprises movable sections to be controlled for longitudinal and transversal movements in respect to said fixed part, so that one or more of the samples to be examined may be placed sequentially in its right position or removed therefrom.

Another object of the invention is to give to the operator the possibility of observing by a microscope the sample du-

-10-

ring the examination of same by the device. Such an observation, while not being indispensable, is to be considered useful and performed by means of a microscope properly mounted on a support which is solid for the box-container structure.

Another object of the invention is to provide a processor of the data resulting from the signal emitted by a photodetector of the device and referred to the rejoined beam at the output stage of the optical system. The data processor according to the invention is properly programmed to display also visually the alpha-numerical results and/or graphic diagrams relating to a single sample or a set of samples which are examined consecutively. This processor is also of relatively small sizes and connected with the device in such a manner that may be used easily to deduce the characteristics of the examined seminal liquid, namely the total number of spermatozoa, the number of motile sper-matozoa and the motility of same, such characteristics being also displayed as graphic diagrams. To improve the operative possibilities of such data processor a first component member is provided which is a photodetector placed directly within the box-container of the device in order to detect the modulated amplitude at the low frequency $(f-f_o)$, the variability of this latter being generally from 0 to some few hundreds hertz. The output signal of the photodetector is then directed to the other component members of the data processor.

On the ground of above considerations, the velocity of motile spermatozoa contained in a sample of seminal liquid to be examined is generally different from one spermatozoon to the other, as evidenced when the same sample is subjected to the same sub-beam of incident light resulting from the division of a coherent beam of monochromatic light emitted by the Laser. That is to say, all the output diffused light of an examined sample does not have like frequency previously indicated whith character f in formula (1). The light diffused by the motile spermatozoa in its whole has by itself a frequency spectrum between a minimum $f_{min} = f_o$ relating to spermatozoa with velocity O and a maximum $f_{max}$ relating to the spermatozoa which are the most motile in the population of the sample. On the other hand, also the signal which is resulting from the beat between the electromagnetic waves of diffused light and light emitted by the Laser has a frequency spectrum from O Hz to $(f_{max} - f_o)$ Hz, the intensity of the several components of the spectrum being proportional to the number of spermatozoa whose velocity v corresponds to such frequency.

The electronic circuit system according to the invention is programmed to precess the data due the output signal of the photodetector and carries substantially on the following functions:

1. amplification of such signal;
2. spectral analysis of the amplified signal by FFT (Fast Fourier Transform);
3. processing of the characteristic parameters of the seminal liquid contained in the sample;
4. display of results (as alpha-numerical results and/or graphic diagrams)

To confirm what has been worded hereabove it is further to be added that, in accordance with the most recent experiments the characteristic parameters of the examined seminal liquid

- 12 -

concern:

a. the total number of spermatozoa anyhow they are present in the sample, such number being proportional to the ingral of the resulting spectrum, i.e. proportional to the diffused total optical power;

b. the number of spermatozoa having velocity 0, i.e. a velocity which cannot influence effectively the useful results because of its very low value; such number is proportional to the integral of the spectrum from a frequency 0 to a frequency having a predetermined minimum value;

c. the distribution of velocities $p(v)$ and particularly the velocity $v_c$ cited hereabove, which is considered as the characteristic velocity the values of which are derivable from the frequency spectrum in respect to the frequency.

Fxm the previous statement, the skilled in the art may already form an idea of the novel characteristics of the invention for what concerns the constructive features and easy use of a device according to the invention, as well as the possible quick examination of one or more samples of seminal liquid and a clear display of reliable results. The advantages in respect to devices or apparatus of prior art having like finalities may then be deduced easily.

In order to better value the mentioned novel features of the invention and the advantages which are deriving by the use of this novel device, a description is hereafter reported which is referred to the accompanying drawings and concerns an example only of a preferred embodiment and not a limitation of same. It is also to be pointed out that, while the description and drawings are particularly related to the examination of human seminal liquid, the application based on

-13-

the principles of the invention is to be considered as extended to the examination of seminal liquid of animals when the different characteristic parameters of these latter and even the differences between the parameters of bovine, equine or porcine animals are taken into account.

This possible application of the invention in the zootechnic field is here emphasized because the artificial insemination of animals is already put into practice commonly and is also put into common practice the sale of animal sperm. In spite of remarkable prices of sale the buyer does not have however any security about the "good quality" of the purchased sperm, that is to say, about the fecundation capability of same neither from the biological or commercial point of view, so that it is not at all impossible that the sold sperm has characteristics of reproductivity actually insufficient. The use of a device according to the invention may then be an effective and objective aid also in the zootechnic field.

The description of an embodiment of the invention is referred to the accompanying drawings and relates to a preferred example of the novel device to be used for the examination of human seminal liquid.

In the drawings:

fig. 1  is a schematic block view of the optical system provided for a device according to the invention, wherein a coherent beam of monochromatic light emitted by a Laser and the division of same in two sub-beams having the original frequency and the frequency of diffused light, respectively, are shown to provide the Doppler effect as well

0069092

- 14 -

as the beating phenomenon, the output signal of such optical system being then processed electronically;

fig.2 is a schematic elevation view of a partially uncovered box-container structure containing the optical analysis system, a support unit for sample/samples of seminal liquid to be examined and the first component member of the data processor, namely a photodetector the output signal of which is transmitted to the other components of the processor;

fig.3 is a schematic elevation view from one of the outer sides of the box-container;

fig.4 is a schematic elevation view as a detail of the support unit of sample/samples to be examined;

fig.5 is a schematic top view of the support unit of fig.4;

fig.6 is a schematic view of possible secondary radiations reflected by an optical component, particularly when the surface thickness of same is remarkable, the cover of component members of the optical system being blackened and provided with openings which allow the passage therethrough of only or nearly only the main reflected and refracted rays;

fig.7 is a block diagram of the electronic system to process the data transmitted by the rejoined beam which is coming out from the optical system, in order to deduce and display alpha-numerical results and/or graphic diagrams on the ground of which the evaluation of the sample characteristics may be considered;

figs.8 to 11 are circuit details relating to the main components of the electronic system in accordance with the invention.

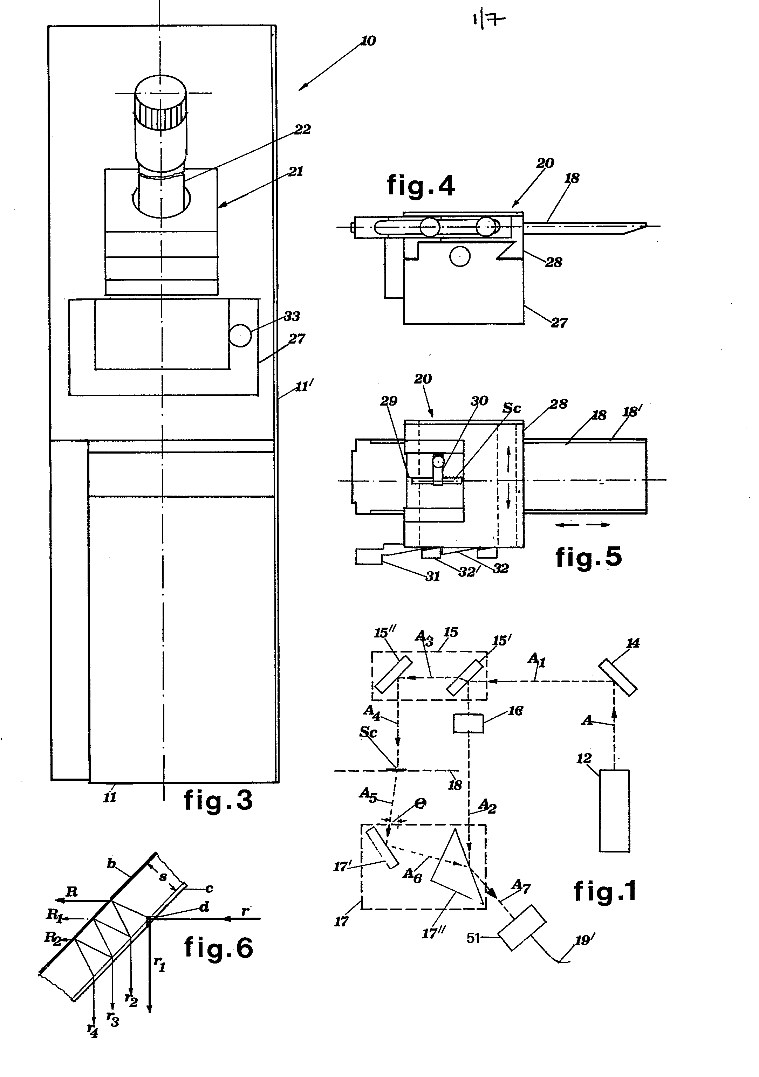

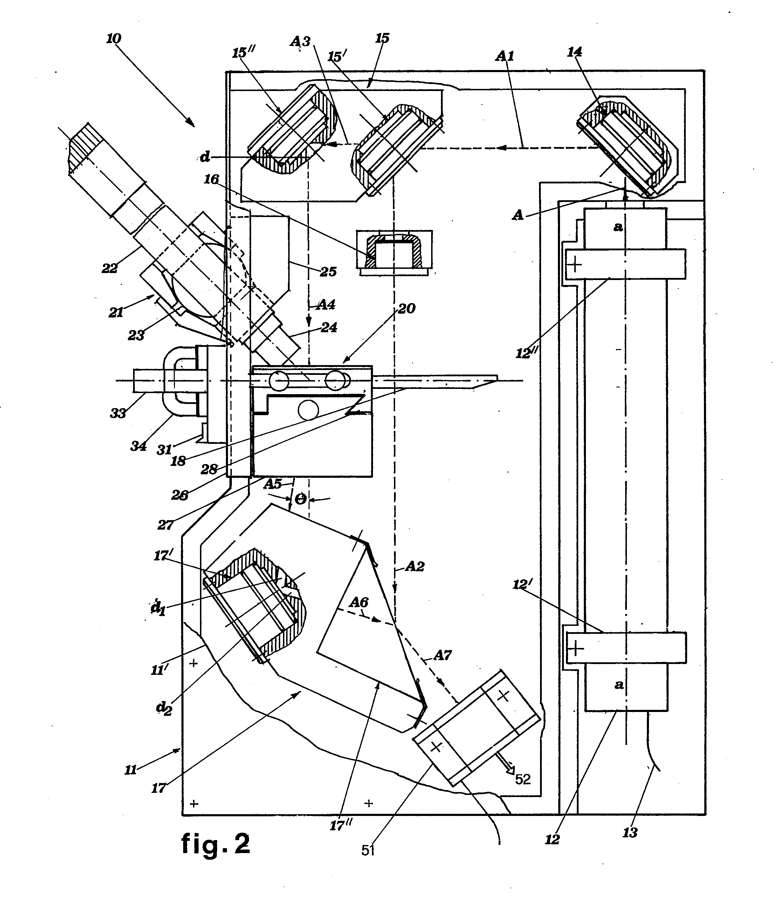

Turning now to the drawings and first of all to fig.1, a

-15-

block diagram is shown of the device component members according to a preferred embodiment of the invention. The component members are operating in such a manner that when a Laser 12 is energized to emit a coherent beam of monochromatic light A it is after all possible to draw out a final rejoined beam A7 to be passed to a photodetector 51 the output signal of which is analysed by electronic way in order to value the results. These results may be presented preferably as alpha-numerical results and/or diagrams when a sample of seminal liquid is placed suitably on a plane 18 of a support unit of the device for being analysed in accordance with the principles evidenced in the premises.

From the schematic block view of fig.1 it is indeed possible to point out that the beam of monochromatic light A emitted by Laser 12, after being reflected as A1 through the optical component member indicated by the reference numeral 14, is at once subjected to a division by means of beam divider 15 in order to draw out a first reference sub-beam A2 having the original frequency $f_o$, as well as a second sub-beam A4 coming out from divider 15 after its refraction in A3 through optical component member 15' and its reflection through optical component member 15". The scope of the division of reflected beam A1 in two sub-beams A2 and A4 may be easily understood by seeing the schematic block view of fig.1, wherein such second sub-beam A4 is acting on the sample Sc when this latter is placed suitably on a plane 18 of support unit 20 (see figs.4 and 5) in order to be analysed in accordance with the principles of the invention.

Further in accordance with the schematic view of fig.1, beam light A4 incident on sample Sc will be subjected to diffusion because of the characteristics of this latter. In order to

-16

value reliably the results obtained by exploiting the Doppler effect, the examination of diffused light A5 has been preferred along a direction which gets out 8 to 10° only from the direction of sub-beam A4 incident on sample Sc being examined. An examination along a diffused light direction within larger angles is however possible.

A component 17 of the optical system comprising members 17' and 17" gives rise to reflecting and refracting effects, so that a beam A6 is provided by member 17' and properly directed to member 17" in order to be joined with the first sub-beam A2 at its output therefrom. As desired, a final rejoined beam A7 is thus formed with a beating phenomenon generated by the two electromagnetic waves relating to the original frequency $f_o$ of sub-beam A2 and frequency $f$ of the light diffused by the examined sample Sc. Such a final beam A7 is passed to the first component 51 of a processor, namely a photodetector, to evidence the beginning of data processing from the output signal coming therefrom.

As premised, the motion frequency of the spermatozoa may range from a value 0 to a maximum value $f_m$, the motion of the spermatozoa having different directions. On the other hand, the motion velocity is rather limited, particularly when referred to the light velocity. As also premised, a beating phenomenon is to be generated in order to obtain those comparisons from which the necessary evaluations may be deduced by spectroscopic way and exploiting the Doppler effect. According to the preferred embodiment of the invention , a device 10 is provided the most important component members of which are shown in figs.2 and 3. The skilled in the art may remark that the manufacture of such a device is relatively easy and inexpensive, also because of the relatively small sizes of same. Moreover such a device may be operated by not-qualified operators. Real advantages are also deriving from the reeliable results which are obtainable by the processor, with video-display of same as alpha-numerical results and/or graphic diagrams. One or more samples of seminal liquid contained in mini-test tubes may be placed on the plane of a suitable support unit of device 10 to be examined sequentially.

Turning now to the drawings of device 10 and particularly to figs.2 and 3, it is first of all to be evidenced a novel characteristic relating to Laser 12, namely the use of a He-Ne Laser (red light) of the polarized type either to provide the desired division of the emitted beam of light and exploit the Doppler effect, and to use at least a part of optical component members without a previous treatment of their reflecting or refracting surface. Obviously, the possible use of component members of the optical system without a previous treatment of their surface is by itself to be considered as a further novel characteristic of the device according to the invention.

According to fig.2, Laser 12 has its ignition electrode connected to an electric source by a cable 13. The Laser is mounted between support members 12' and 12" so that it may rotate about its axis a-a in order to reach the most favourable operative and constructive conditions of the optical system of device 10, as recalled above. An optical power of 1 to 5 mW for practical applications according to the invention may be considered sufficient.

The optical system of device 10 is actually enclosed within a box-container 11 provided with a main cover 11'. A support unit 20 is also enclosed within box-container 11 on the plane 18 of which one or more mini-test tubes may be leaned and fastened, which contain the seminal liquid to be analysed. To one side of box-container 11 the Laser 12 may be placed and fastened, while to the opposite side a support 21 for a microscope 22 is provided, also the obj-ective of this latter being placed within box-container 11 to give to the operator the possibility of following the analysis phase of each sample Sc of seminal liquid by a direct microscopic observation, when this is desired and/or considered of some importance.

In figs.1 and 2 it is evidenced that the optical system for the division of the beam of light emitted by Laser 12 and exploitation of the Doppler effect in order to reach the finalities pointed out in the premises, is actually vey simple and provided with component members 14,15'-15", 17'-17" which are acting consecutively to generate the reference beam A2 having the original frequency $f_o$ and the final rejoined beam A7 with photon beating. As said above, a novel characteristic of the selected optical system - which is coupled well with tha novel characteristic relating to the polarization of Laser 12 - concerns the avoidance of a conventional treatment in regards of at least a part of the operative surfaces of its component members. In fig.2 a further important novel characteristic of this optical system is provided, namely the radial limitation of incident or reflecting beam, the scope of which is to avoid as much as possible the negative or disturbing influence of secondary reflecting or refracting beams or rays the presence of which may be possible when the glass thickness of optical component members is relatively considerable as in the case of embodiment according to the invention.

While well known, the presence of these secondary rays $r_2$, $r_3$, $r_4$...together with the main reflected ray $r_1$ of a ray r incident on the outer surface of a glass b has been schematically shown in fig.6, to better detail the importance to be attached to the provided opening d in the case of optical component member 15' and still better to the openings $d_1$ and $d_2$ of component member 17', because these latter concern separately the incident beam A5 and the reflecting beam A6 which is consecutively refracted by the outer surface of component member 17". The component optical member is covered by a blackened thin plate to protect it against a general passage of light, as the passage of the light is possible only through said properly provided openings d or $d_1$-$d_2$.

The description of the optical system of device 10 is now continued to point out that: a component member 16 is interposed along the direction of reference beam A2, such component member 16 comprising a grey filter to attenuate the luminous intensity of beam A2 when necessary for balancing purposes between beams A2 and A6; a diffusion angle θ is previously selected for such beam of light which is conveyed through said opening $d_1$ relating to component member 17' after having struck the sample Sc placed on the support plane 18 of support unit 20. As said above, according to this embodiment the angle θ has been supposed of about 8 to 10° without any limitative purpose for the invention, but only to indicate a preferred value for the examination of a sample according to the formula (1) of the Doppler effect.

A particular attention is to be paid to support unit 20 which is schematically shown in fig.2 and detailed in figs. 4 and 5. It is possible to understand that such support unit 20 is provided in device 10 as solidly connected thereto to support one or more samples of seminal liquid to be analysed. A fixed portion 27 of same is provided with a thermostat generally regulated at 37°C in order to keep in the most suitable conditions the sample/samples to be analysed, while portions 28 and 18 may be controlled to be moved along two directions perpendicular to each other, as it may be seen in figs.4 and 5.

As recalled above, the consecutive examination of one or more samples of seminal liquid enclosed in respective mini-test tubes is possible by using device 10. When at the moment the examination is referred to one sample only enclosed in a mini-test tube Sc (see fig.5), it is to be added that the part 28 of support unit 20 which may be moved along the direction perdicular to the plane of the drawing, i.e. across device 10, is guided by swallow-tailed grooves provided in the fastened part 27 wherein a thermostat is placed (not shown). It may be of some interest to know that these mini-test tubes containing the seminal liquid to be examined have preferably a length of about 30 to 40 mm and a cross section shaped rectangularly one side of which is about 0,1 to 0,4 mm high and the other 1 to 3 mm wide. The across displacement of such movable part 28 is then to be considered limited to the initial regulation only in order to define the position which is suitable either for the incidence of beam A4 thereon and the easy observation by the microscope. To place rightly a sample Sc for the examination, a shoulder 29 is also provided on plane 18 of support unit 20. Such plane 18, while mounted in movable part 28 to follow the cross displacements of this latter, may also be moved independently in a longitudinal direction along guides 18', so that after all the operator may move as desired the part 18 either to place and fasten the mini-test tubes Sc thereon by means of conventional elastic thin plate 30 and remove same therefrom at the end of the examination, as suitable motions of movable part may be performed along the one or other opposite direction indicated by the arrows. A pushing element 31 is also provided to fasten plane 18 at the one or the other of its end positions, place a sample rightly for the examination, as well as translate from the one to the other end positions such a movable plane, this element 31 being provided with a teeth 32 to be in turn fastened against a support 32'and moreover controlled by means of a further element 33. A handle 34 is also provided which is to be controlled by the operator to perform easier and as desired the displacement of the sample supporting plane 18.

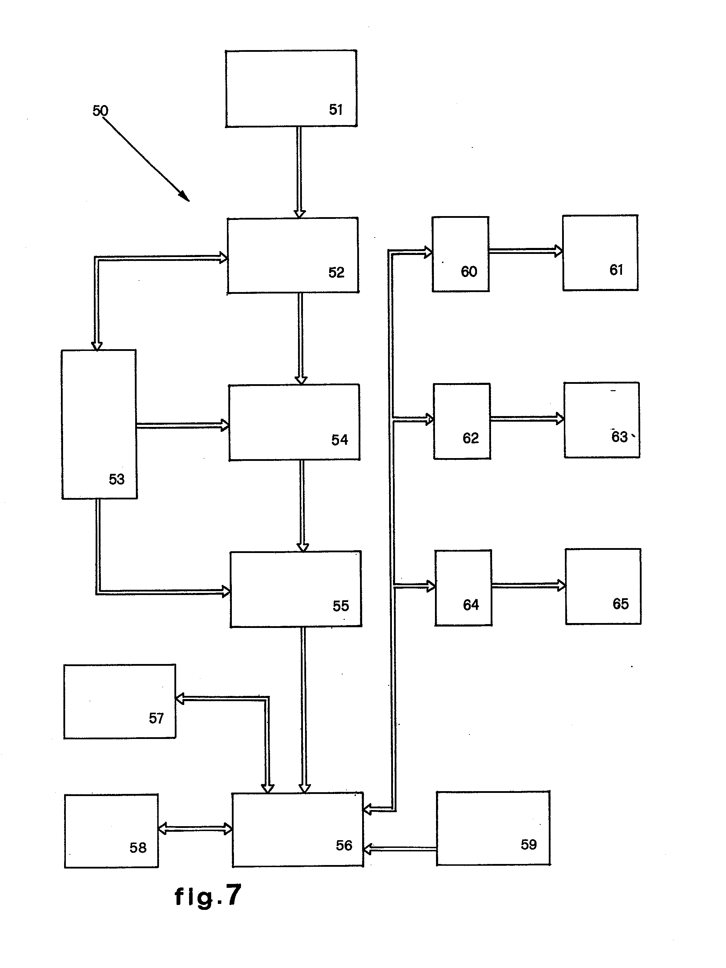

As premised and then confirmed at the beginning of the description, when a device 10 is used in accordance with the invention, the results of analysis of one or more samples of seminal liquid are electronically processed to draw out the desired conclusions which are displayed as alpha-numerical results and/or graphic diagrams. The electronic circuit system concerning such data processing is described hereafter and referred to figs. 7 to 11 of the accompanying drawings. As also premised, the operator may however follow the examination of sample/samples by a microscopic observation. In fig.2 it is particularly possible to see that a microscope 22 is mounted on a support 21 which is fastened solidly to box-container 11 of device 10 throgh a fixed part 25. The microscope is mounted on its support 21 with the axis directed to the sample Sc and falling in with beam A4 incident
thereon, in order that the direction of observation through
microscope 22 may be suitable to reach the desired finality.

A slightly modified direction of observation is however possible when considered of some importance by the operator. For
this purpose the tubular member of microscope 22 is inserted
within a support member  having an outer spherical surface 23
which in turn is movable between planes of support 21. These
latter are thus acting as tangential planes on said spherical
surface 23.

Further modifications may concern, for example, an auxiliary
lighting device, as well as the substitution of the eye-piece
of the microscope by a suitable telecamera, one or both these
modifications being obviously of some importance when a better
observation is to be carried out.

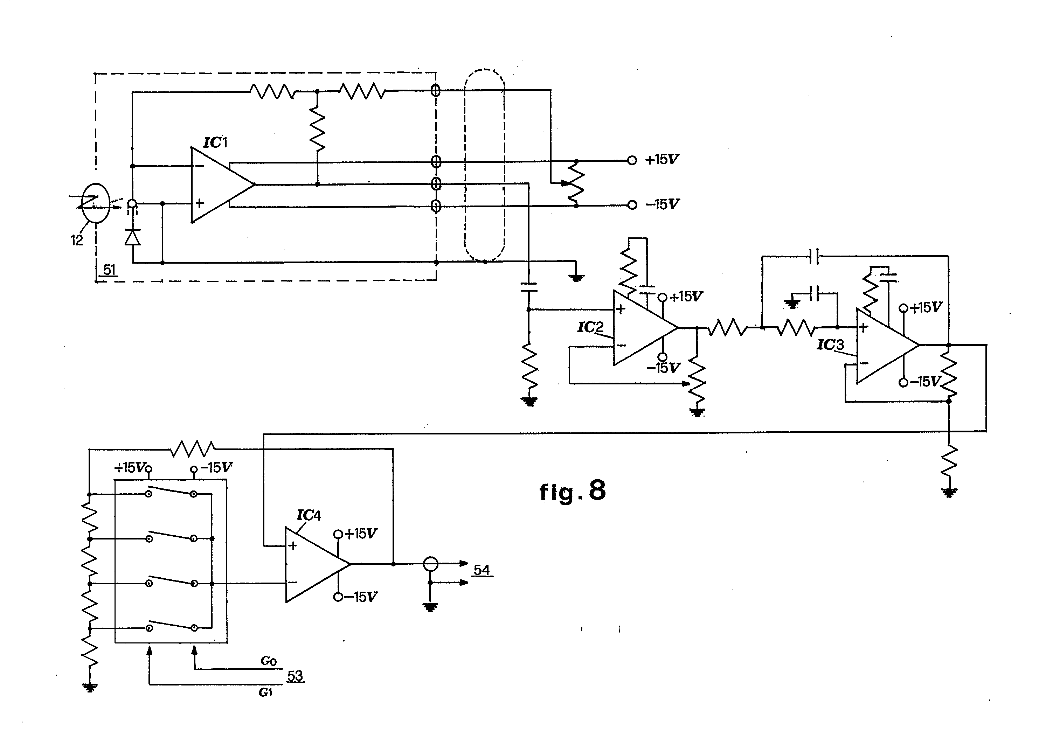

Turning now to the data processing referred to the results
of the examination of sample/samples Sc and starting from the
beating phenomenon evid-enced through the rejoined beam A7,
a processor is provided according to the invention. An example of electronic system for such data processing and display
of definitive alpha-numerical results and/or graphic diagrams
is shown in block diagram 50 of fig.7, while details of the
main component circuits of same are shown in figs.8 to 11.

As stated above, a photodetector 51 while being a component
of electronic system 50, namely the first component of same,
is enclosed within box-container 11 of device 10, not only

-23-

for a better convenience, but also and principally to provide an output signal due to the incidence of beam A7 and beat provided therethrough. Such output signal is then passed to the other components of processor which may complete their functions and display the results of the examination as desired.

As shown in fig.8, the component 51 of electronic system 50 actually comprises a photodiode of PIN type and a pre-amplifier IC1. It is indeed to be recalled that both sub-beam of light A5 diffused by a sample Sc after the beam of light emitted by Laser 12 has been divided, and the rejoined beam A7 are very faint. The use of a very sensitive photodiode of PIN type with the next pre-amplifier IC1 gives the possibility of an output voltage sufficient to be conveyed to the data processor through a shielded cable, also when the processor is placed at some distance from device 10. As shown in fig.8 the output signal of pre-amplifier IC1 is furthermore amplified and filtered by a band-pass filter from 0,1 to 300 Hz, by means of integrated circuits IC2, IC3, so that any noise of pre-amplifier IC1 and photodiode PIN may be eliminated.

From the experiments of the Applicant it has been possible to deduce that the analysis system must have a dynamic of at least 90 dB to abridge the variations of intensity which are eventually presented by a signal to be analysed,when the examination is performed by passing from a pathologic to a normal sample of seminal liquid. The components indicated with reference numerals 52 and 54 in fig.7 allow to reach such a dynamic.

Component 54 is in effect an analog-to-digital converter of 11 bits + 1 of sign and by using same a dynamic of $20 \log 2^{11} = 66$ dB is reached. The remainder 24 dB are added particularly when the signals are very faint, the amplification of same being provided by a variable-gain amplifier indicated with reference numeral 52 in block diagram of fig.7 and comprising integrated circuit IC4. Such amplifier is programmable by digital signals G0, G1 which in turn act on comnent 53 as control circuit of variable-gain amplifier 52, so that the regulation on the basis of said signals may be performed and converter 54 may operate with its best dynamic characteristic.

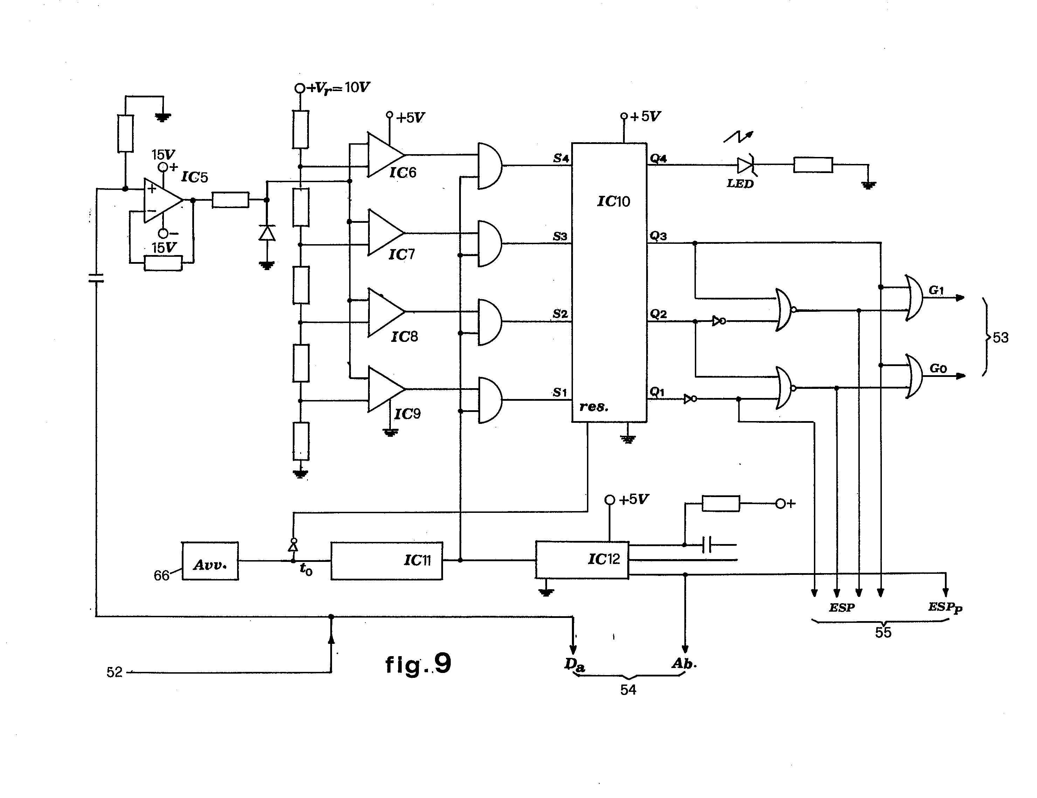

In circuit section of fig.9 it is possible to see that the signal coming out from the circuit mentioned hereabove is fed to a four comparator unit after having passed through a buffer IC5, such a unit comprising the integrated circuits IC6, IC7, IC8, IC9 which have fixed levels of voltage.

To start the exponential analysis the operator acts on the starting push-button 66 provided on the control panel. The integrated circuit IC10 stores then the maximum intensity of the signal according to exponential values $1 - 2^1 - 2^2 - 2^3$ and overflow for the duration of 10 seconds controlled by a timer IC11, after which said signals G0, G1 are obtained by a suitable decodification. After such stated time interval of 10 sec a pulse $ESP_p$ of 10 msec is generated by the integrated circuit IC12 to point out that the exponential signal has been computed.

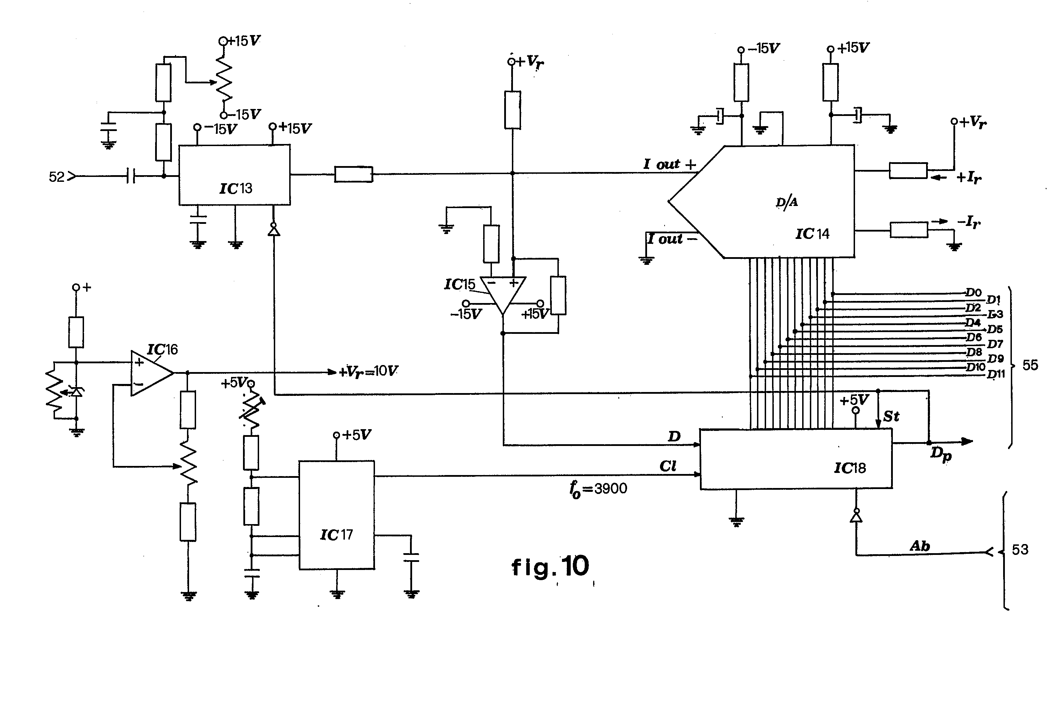

According to the circuit detail of fig.10 the output signal

- 25 -

of variable-gain amplifier 52, the mean value of which is 0 because of the effect of band-pass filter, is added to a continuous component equal $V_r/2$, where $V_r$ is the predetermined reference voltage of 10 V. Such compound signal will never have the value 0 or a voltage like the reference voltage $V_r$ because of the compression of variable-gain amplifier 52. From the circuit detail of fig.10 it is also possible to note that the signal, after its passage through an integrated circuit IC13 having sample-and-remember features, is continuously compared with the output of a digital-to-analog converter of 12 bits by means of integrated circuit IC15, such converter comprising the integrated circuit IC14, output date D of integrated circuit IC15 being passed to integrated circuit IC18 forming a register of the sequential approssimation type, of 12 bits. When through such comparison a result of equality is coming out, an output signal date of 12 bits is obtained together with a validation signal (Ready Date $D_p$) from the integrated circuit IC18, to be passed to interface circuit A/D indicated by the reference numeral 55.

As premised, the maximum signal frequency of 300 Hz is previded. The sampling frequency will have a double value. From the circuit detail of fig.10 it is also possible to notice that an oscillator IC17 is provided which is suitable to give a frequency $f_o = 3,900$ Hz, i.e. equal to 13x300 Hz where $13 = 12$ bits $+ 1$ (Ready Date $D_p$).

A special signal Ab from the control component 53 of the amplifier and exponential helds the analog-to-digital converter stopped at the output value 0 during the presentation time interval of 10 msec relating to the exponential.

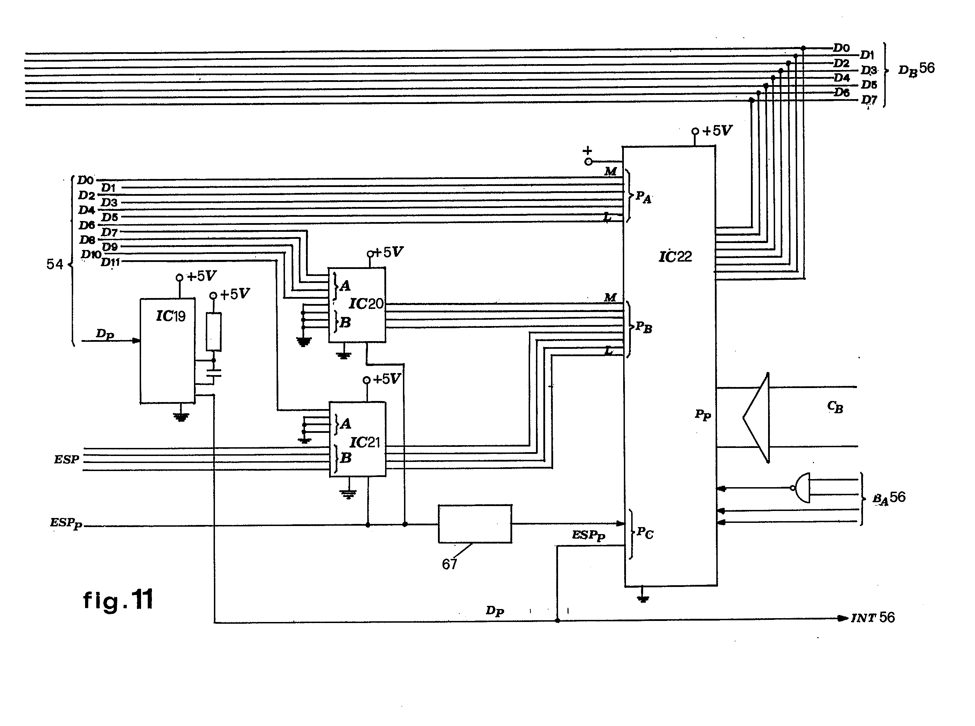

According to the circuit detail shown in fig.11, the exponential of the signal which is converted to a digital date is successively presented to the low section of the gate $P_B$ of an integrated circuit IC22, while the high section of such gate $P_B$ is put to the value 0 through the integrated circuit IC20. The whole operation is carried out in the time interval of 10 msec of the Exponential Ready signal indicated with reference characters $ESP_P$. The data are presented successively to the gate A of integrated circuit IC22 and high section of gate B of same, together with a bit of the low section, i.e. a total of 13 bits (12 bits of the signal + 1 bit high fixed), while the remainder is put to 0. An output pulse from integrated circuit IC19, the duration of which is 45 usec, is directed to a microprocessor 56 ( see fig.7) to advise that in analog-to-digital converter indicated by numeral 54 the date $D_p$ is ready, so that the operation is to be cut off.

From the circuit detail of fig.11 it is further possible to deduce that the signal of the bus of data $D_B$ relating to microprocessor 56 as well as those of control bus $C_B$ from the programmable gate $P_p$ and addressing bus $B_A$ of processor are all conveyed to the integrated circuit IC22.

The operational continuation of electronic system 50 according to block diagram of fig.7 is carried out substantially in a conventional manner to display the results as stated above. Original data are then stored in a write/read memory RAM (Random-access Memory) indicated by numeral 58. In this embodiment the RAM is provided with two sets of 128 data, while three other free sets are utilized by the microprocessor 56 to process the data with the aid of an arithmetical processor 57 as soon as a first set of data $D_p$ is ready.

The program of the data acquirement, processing, storage and display is performed in a memory EPROM (Read-only Memory) indicated by numeral 59. It may be important to notice that such memory has been provided with an employment of 8Kx8, wherein K is the measuring unit equal to 1024, as it is well known.

Through the interfaces indicated by reference numerals 60, 62, 64 the desired presentation of alpha-numerical and diagramatic results relating to the examination of one or more samples of seminal liquid is then carried out. That is to say, the results relating to the examination of each sample, after the beating phenomenon is evidenced through the rejoined beam A7 of device 10, are sent to the processor of electronic system 50 and displayed advantageously in a short time in order that an objective and reliable evaluation may be deduced therefrom in accordance with the basis principles of the present invention.

What we claim is:

1. A device to value objectively the concentration and motility of spermatozoa contained in a sample/samples of seminal liquid, such device comprising:
   - a box-container to contain the optical and microscopic observation component members for the examination of one or more samples of seminal liquid;
   - a Laser emitting a coherent beam of monochromatic light directed through an optical system provided in the device;
   - an optical system suitable to receive said beam of light initially emitted by such Laser and divide same in two sub-beams in order to generate the Doppler effect for the examination of the sample/samples of seminal liquid;
   - a support unit for one or more mini-test tubes containing the seminal liquid to be examined, such support unit having a plane to lean and fasten the test tubes thereon and being movable longitudinally and transversally, so that the sample to be examined may be rightly placed to receive the incident light of that sub-beam which has been selected to act thereon and consequently provide a diffused light influenced by the own characteristics of the examined spermatozoa, this incident sub-beam being then rejoined with the other sub-beam to form a single rejoined output beam to be analysed by the electronic system of the device;
   - a photodetector which is receiving such rejoined beam as the first component member of the electronic system provided to process and display the data resulting from the analysed output signal of said photodetector, such as alpha-numerical results and/or diagrams.

2. A device according to Claim 1 wherein said optical and observation systems, the Laser emitting the coherent beam of monochromatic light, the support unit of sample/samples to be examined, as well as said first component member of said electronic system are all enclosed within a single box-container (11) which may be carried and placed easily for the desired finalities.

3. A device according to Claim 1 wherein a He-Ne Laser (12) (red light) is provided which is of polarized type and has a small optical power, e.g. from 1 to 5 mW.

4. A device according to Claim 1 wherein said optical system comprises reflecting and/or refracting component members (14, 15, 17) to provide:
- the division of a beam of light (A) emitted initially by said Laser (12) in two sub-beams (A2, A4);
- the conveyance of a section of light (A5) of sub-beam (A4) after being diffused by sample (Sc) and the next reflection of said section (A5) to form an output reflected section (A6);
- the final rejoining of this latter reflected section of diffused light together again with sub-beam (A2) to form a single new beam (A7) directed to said photodetector (51) as the first component member of said electronic system to process the data and display the results of the analysis
- elements of said optical system being covered by blackened thin plates which are provided with suitable openings (d) in order to limit the passage-

-3

- 3 -

way area of either reflected or refracted incident rays.

5. A device according to Claim 4 wherein said conveyance of the section (A5) of light diffused by the examined sample after having been subjected to the sub-beam of light (A4) is generally limited within an angle (θ) of about 8 to 10° in respect to the direction of the incident light.

6. A device according to Claim 1 wherein said first component member (51) of the electronic system (50), which is enclosed within box-container (11) of device (10), comprises a very sensitive photodiode PIN and a pre-amplifier (IC1), so that the rejoined incident beam (A7), which is by-itself rather weak like the diffused beam of light (A5), will have an output voltage sufficient to be transmitted to the electronic system of data processing and display of results through a shielded cable.

7. An electronic system for data processing and display of the results of examination of seminal liquid samples performed by a device according to Claim 1, wherein:
   - the output signal of component member (51) is further amplified and filtered by a band-pass filter of 0,1 to 300 Hz, by means of integrated circuits (IC2-IC3);
   - a variable-gain amplifier (52) and a converter A/D (54) are provided in order that the analysis system by means of device (10) has a dynamic of at least 90 dB;

- through a buffer (IC5) the signal gets to four comparators (IC6-IC7-IC8-IC9) having fixed levels of voltage so that the exponential analysis may be started;

- a circuit (53) which controls said variable-gain amplifier (52) and calculates the exponential, together with said analog-to-digital converter (54) provides continuously the comparison between the output signal of amplifier (52) and output of a digital-to-analog converter (IC14) through an integrated circuit (IC15), a validation signal being consequently obtained and passed to a microprocessor (56) through an interface A/D (55) when the equality between the two outputs is provided, so that the digital date resulting from the analog-to-digital conversion may be processed also in a conventional manner;

- for the data acquirement, processing, storage, and the display of the stored digital data, components of read/write memory RAM (58) and components of read-only memory EPROM (59) are provided;

- through interfaces (60-62-64) the results are displayed in a short time as definitive alpha-numerical evaluations and/or graphic diagrams by means of components (61-63-65) which may be, for example: alphaanumerical display; video-display devices; printing devices; oscilloscopes; plotting devices, in accordance with the preferred type of visualization.

fig.3

fig.4

fig.5

fig.1

fig.6

fig. 2

fig.7

fig. 8

fig.9

fig.10

fig.11

European Patent Office

**EUROPEAN SEARCH REPORT**

Application number

EP 82830188.7

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | DE - A1 - 2 709 399 (GÖHDE) <br> * Claims; page 4 * <br> -- | 1 | G 01 N 33/48 <br> G 01 N 15/00 |
| A | DE - A1 - 3 039 825 (PORATH FUREDI) (07-05-1981) <br> * Claims * <br> -- | 1 | |
| A,X | GB - A - 1 202 612 (COMMISSARIAT A L'ENERGIE ATOMIQUE) <br> * Page 1, lines 65-76,93 - page 2, line 32; page 2, lines 67-101; claims 1,2,8 * <br> ---- | 1,4 | |

TECHNICAL FIELDS SEARCHED (Int.Cl. 3)

G 01 N 15/00
G 01 N 21/00
G 01 N 33/00
C 12 Q 1/00

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search <br> VIENNA | Date of completion of the search <br> 27-09-1982 | Examiner <br> TENGLER | |

EPO Form 1503.1 06.78